# EUROPÄISCHE PATENTSCHRIFT

(11) **EP 3 446 826 B1**
(45) Veröffentlichungstag und Bekanntmachung des Hinweises auf die Patenterteilung: **28.06.2023**
(21) Anmeldenummer: 18188658.1
(22) Anmeldetag: 13.08.2018
(51) Int. Cl.: B23Q 1/01

(54) **WERKZEUGMASCHINE**
MACHINE TOOL
MACHINE-OUTIL

(30) Priorität: 24.08.2017 DE 102017007962
(43) Veröffentlichungstag der Anmeldung: 27.02.2019
(73) Patentinhaber: Deckel Maho Seebach GmbH, 99846 Seebach (DE)
(72) Erfinder: SUCKERT, Fabian, 99084 Erfurt (DE)
(74) Vertreter: MERH-IP Matias Erny Reichl Hoffmann Patentanwälte PartG mbB

(56) Entgegenhaltungen:
- WO-A1-00/00323
- JP-A- S57 211 441
- US-A- 4 955 770
- US-A1- 2013 333 532

## Beschreibung

Die vorliegende Erfindung betrifft eine Werkzeugmaschine.

### HINTERGRUND DER ERFINDUNG

Einen der wesentlichsten Bestandteile einer Werkzeugmaschine stellt, neben der werkzeugtragenden Bearbeitungseinheit und den eingesetzten Messsystemen, das Maschinenbett dar. Ihm kommt eine wesentliche Aufgabe für die Genauigkeit der zu fertigenden Teile zu, da es durch eine entsprechende Steifigkeit die auftretenden Kräfte und Lasten während des Bearbeitungsprozesses aufnehmen muss. Dies gilt besonders bei vergleichsweise großen Werkzeugmaschinen, in denen großvolumige Bauteile mit einem entsprechend hohen Gewicht bearbeitet werden. Dabei gilt, je höher die Steifigkeit des Maschinenbettes, umso genauer das Ergebnis der Fertigung.

In der Regel wird dafür in dem Maschinenbett eine innere Stützstruktur vorgesehen, die dafür sorgen soll, die Steifigkeit zu maximieren und gleichzeitig den Materialeinsatz zur Ausbildung des Maschinenbettes zu minimieren. Ferner kann die Stützstruktur des Maschinenbettes Freiräume und Durchgänge für funktionswichtige Leitungen oder Aggregate aufweisen.

Eine Werkzeugmaschine gemäß dem Oberbegriff des Anspruchs 1 ist aus der EP 3 023 190 A1 bekannt, die senkrecht angeordnete Unterstützungselemente unterhalb der Führungsschienen aufweist, damit kleinste Bewegungen der Seitenteile des Maschinenbettes, die die Führungsschienen tragen, vermieden werden.

Eine wichtige Aufgabe des Maschinenbettes stellt zudem die Ableitung der anfallenden Metallspäne aus dem Arbeitsbereich der Werkzeugmaschine dar. Insbesondere bei großen Materialvolumen, die vom Werkstück abgetragen werden müssen, muss eine entsprechend große Menge an Kühl-Schmierstoff zusammen mit den anfallenden Metallspänen während der Bearbeitung des Werkstücks aus dem Arbeitsbereich der Werkzeugmaschine zuverlässig entfernt und im Anschluss daran aus der Werkzeugmaschine befördert werden. Kommt es zu einem Stau von Metallspänen am Werkstück, kann das dazu führen, dass unerwünschte Kratzer am Werkstück entstehen oder gar ungewollt mehr Material vom Werkstück abgetragen wird (aufgrund des Einbringens der Metallspäne in den Abtragsprozess), was die Fertigungstoleranzen stark schwanken lässt.

Beide Anforderungen, eine hohe Steifigkeit des Maschinenbettes zu erreichen und dabei gleichzeitig das Abführen von großen Mengen an Metallspänen und/oder Kühl-Schmierstoff zu gewährleisten, miteinander zu vereinen kann ein Problem bei der Ausgestaltung bzw. Konstruktion des Maschinenbettes darstellen, so dass häufig Kompromisse eingegangen werden müssen.

Aus der WO 00/00323 A1 ist ein Maschinenbett für eine Werkzeugmaschine bekannt, das in seinem Querschnitt im Wesentlichen in der Form eines auf dem Kopf gestellten Dreiecks entspricht.

### ZUSAMMENFASSUNG DER ERFINDUNG

Eine Aufgabe der vorliegenden Erfindung ist es daher, eine Werkzeugmaschine bereitzustellen, mit der das obige Problem vermieden werden kann.

Diese Aufgabe wird gelöst durch eine Werkzeugmaschine nach Anspruch 1. Die abhängigen Ansprüche beziehen sich auf vorteilhafte Ausführungsbeispiele der erfindungsgemäßen Werkzeugmaschine.

Die erfindungsgemäße Werkzeugmaschine, weist auf: ein auf Maschinenfüßen getragenes Maschinenbett, das aus einer Tragstruktur von miteinander verbundenen Rippen gebildet wird, wobei auf der Oberseite, an gegenüberliegenden Außenseiten des Maschinenbettes zwei ein Portal tragende Führungsschienen zum Verfahren des Portals auf dem Maschinenbett angeordnet sind, wobei das Portal oberhalb eines Maschinentisches verfahrbar ist, der zwischen den zwei Führungsschienen vorgesehen ist, und beidseitig des Maschinenbettes erste Hauptrippen vorgesehen sind, deren Profil im Querschnitt des Maschinenbettes unterhalb der Führungsschienen beginnt und sich im Maschinenbett schräg nach innen, hin zu Maschinenfüßen erstreckt, um auf die Führungsschienen wirkende Lasten in die Maschinenfüße einzuleiten.

Durch die vorgeschlagene Anordnung der ersten Hauptrippen, die sich von den Führungsschienen schräg nach innen zu den Maschinenfüßen erstrecken, können die Lasten, die auf die Führungsschienen wirken (z.B. Masse eines auf den Führungsschienen verfahrbaren Portals; durch eine Bearbeitungseinrichtung an dem Portal entstehende Bearbeitungskräfte, etc.), in direkter Lastwirkungslinie in die Maschinenfüße eingeleitet werden. Dies führt zu einer erhöhten Steifigkeit der Werkzeugmaschine.

Die erfindungsgemäße Anordnung der Rippen wirkt sich im besonderen Maße vorteilhaft auf die Stabilität und Steifigkeit des Maschinenbettes aus, wenn das Maschinenbett mit einer 3-Punkt-Auflage auf dem Untergrund aufgestellt wird. Hierdurch werden die hohen Steifigkeiten des Maschinebettes durch die Verrippungen mit der standfesten und gut justierbaren Aufstellung einer 3-Punkt-Auflage kombiniert, so dass auftretende Kräfte beim Bearbeitungsprozess und/oder Lasten z.B. des zu bearbeitenden Werkstücks optimal in den Untergrund eingeleitet werden. Dies ist deswegen vorteilhaft, da es nur noch zu minimalen Verformungen des Maschinenbettes aufgrund von z.B. veränderlichen Lasten kommen kann, wobei sich diese Verformungen aber nicht weiter auf die Standfestigkeit des Maschinenbettes auswirken können.

Zusätzlich kann durch die vorgeschlagene Anordnung der ersten Hauptrippen gewährleistet werden, dass die Führungsschienen einen größtmöglichen Abstand (auch Führungswagenabstand genannt) miteinander aufweisen. Dieser Abstand hängt von der Maschinenbettgröße ab. Daher ist es wichtig, dass die Führungsschienen möglichst nah am Rand des Maschinenbettes vorgesehen werden, um durch den größtmöglichen Führungswagenabstand zusätzlich die Steifigkeit der jeweiligen Werkzeugmaschine zu maximieren.

Vorteilhafterweise ist das Maschinenbett derart ausgestaltet, dass die Lasteinleitung der Führungsschienen von der Lasteinleitung des Maschinentisches getrennt ist. Dies wird durch zweite Hauptrippen ermöglicht, die in nahezu direkter Lastwirkungslinie zwischen Maschinentisch und den Maschinenfüßen angeordnet sind und dabei noch zusätzlich Querkräfte aufnehmen können. Dies führt dazu, dass eine gegenseitige Beeinflussung von Bearbeitungseinrichtung (z.B. Bearbeitungskräften, die durch die Führungsschienen in das Maschinenbett eingeleitet werden und somit den Maschinentisch beeinflussen) und Maschinentisch (z.B. durch die durch den Maschinentisch aufgenommenen Lasten, die sich auf die Führungsschienen auswirken) nicht stattfindet. Hierdurch kann eine höhere Genauigkeit der Bearbeitung erreicht werden.

Zusätzlich entsteht durch die vorgeschlagene Anordnung der ersten und zweiten Hauptrippen, unterhalb der Führungsschienen und in Bodennähe, ein Freiraum, der es ermöglicht, eine Einrichtung zum Abtransport von während der Werkstückbearbeitung anfallendem Material (z.B. Metallspäne, Kunststoffspäne oder Spangut anderer Materialien) einzuschieben. Dies hat den entscheidenden Vorteil, dass sich die Einrichtung zum Abtransport der Metallspäne näher an dem Maschinentisch befindet und somit schneller die anfallenden Metallspäne aus dem Arbeitsbereich der Werkzeugmaschine abgeführt werden können. Dies verringert das Risiko eines Spänestaus innerhalb der Werkzeugmaschine.

Ferner kann durch das Einschieben der Einrichtung zum Abtransport der Metallspäne die notwendige Aufstellfläche der Werkzeugmaschine erheblich reduziert werden, da die Einrichtung durch das Einschieben in das Maschinenbett in die Werkzeugmaschine "integriert" wird. Neben dem technischen Vorteil, dass dadurch das Ableiten bzw. Auffangen des Kühl-Schmierstoffs mit den Metallspänen zuverlässig unterhalb des Maschinentisches erfolgen kann, bietet das Einschieben der Einrichtung zum Abtransport der Metallspäne in das Maschinenbett ferner einen kompakten Aufbau der Werkzeugmaschine.

Eine besonders vorteilhafte Weiterbildung der erfindungsgemäßen Werkzeugmaschine besteht darin, dass in Bezug auf die ersten Hauptrippen innen beidseitig zweite Hauptrippen vorgesehen sind, deren Profil im Querschnitt des Maschinenbettes unterhalb des Maschinentisches beginnt und sich im Maschinenbett schräg nach außen, hin zu den außenliegenden Maschinenfüßen erstreckt, um auf den Maschinentisch wirkende Lasten in die Maschinenfüße einzuleiten.

Hierdurch kann die Last des Maschinentisches vorteilhaft in die Maschinenfüße eingeleitet werden, da die zweiten Hauptrippen in nahezu direkter Lastwirkungslinie zwischen Maschinentisch und den Maschinenfüßen angeordnet sind. Zusätzlich können die zweiten Hauptrippen Querkräfte aufnehmen, die z.B. durch die Bearbeitung des Werkstücks, das auf dem Maschinentisch befestigt ist, entstehen.

Eine weitere vorteilhafte Weiterbildung der erfindungsgemäßen Werkzeugmaschine besteht darin, dass das Maschinenbett seitlich unterhalb der Führungsschienen im Bodenbereich jeweils einen Freiraum aufweist, der dazu geeignet ist, eine materialtransportierende Einrichtung seitlich unter das Maschinenbett einzuschieben.

Aufgrund dessen, dass die materialtransportierende Einrichtung unter das Maschinenbett bzw. in das Maschinenbett eingeschoben werden kann, können der Kühl-Schmierstoff und anfallende Metallspäne, die vom Maschinentisch herabfallen, zuverlässig abtransportiert werden und voneinander getrennt werden, so dass eine Entsorgung der Metallspäne (z.B. in spezielle Auffangbehälter) sowie eine Aufbereitung des vom Maschinentisch abfließenden Kühl-Schmierstoffes erfolgen kann.

Die erfindungsgemäße Werkzeugmaschine kann dadurch vorteilhaft weitergebildet werden, dass die materialtransportierende Einrichtung entlang einer gesamten Seitenlänge des Maschinenbettes unter das Maschinenbett eingeschoben werden kann.

Dies hat den Vorteil, dass Metallspäne sowie Kühl-Schmierstoff nicht nur innerhalb eines begrenzten Bereiches der Werkzeugmaschine, sondern entlang der gesamten Länge der Werkzeugmaschine aufgefangen bzw. abgeleitet werden können. Dies ist deshalb besonders vorteilhaft, da sich während der Bearbeitung des Werkstücks die Metallspäne bzw. der Kühl-Schmierstoffes im gesamten Arbeitsbereich der Maschine verteilen können und daher entlang der gesamten Maschine die Möglichkeit des Auffangens bzw. Ableitens von Metallspänen und/oder Kühl-Schmierstoff gewährleistet sein sollte.

Ferner kann die erfindungsgemäße Werkzeugmaschine dadurch vorteilhaft weitergebildet werden, dass das Maschinenbett derart ausgebildet ist, dass eine Außenseite der materialtransportierenden Einrichtung mit einer entsprechenden Außenseite des Maschinenbettes, nach dem Einschub der materialtransportierenden Einrichtung unter das Maschinenbett, im Wesentlichen bündig abschließen kann.

Der Vorteil dabei ist, dass durch das "Integrieren" der materialtransportierenden Einrichtung in das Maschinenbett mehr Sicherheit für den Maschinenbediener an der Werkzeugmaschine erreicht werden kann. Da sonst üblich eine derartige materialtransportierende Einrichtung im direkten Umfeld zur Werkzeugmaschine aufgestellt wird, besteht immer die Gefahr, dass sich der Maschinenbediener daran verletzen oder einfach darüber stolpern könnte. Neben dem positiven Effekt in Bezug auf die Sicherheit an der Werkzeugmaschine bietet das "Integrieren" der materialtransportierenden Einrichtung in das Maschinenbett auch einen kompakteren Aufbau der Werkzeugmaschine, da die Einrichtung nun nicht mehr direkt neben der Werkzeugmaschine aufgestellt sein brauch.

Eine besonders vorteilhafte Weiterbildung der erfindungsgemäßen Werkzeugmaschine besteht darin, dass in dem Maschinenbett beidseitig Leitrippen vorgesehen sind, deren Profil im Querschnitt des Maschinenbettes unterhalb einer Außenseite des Maschinentisches beginnt und sich im Maschinenbett schräg nach außen, hin zu dem entsprechenden Freiraum erstreckt, um vom Maschinentisch herabfallendes Material zu dem Freiraum zu leiten, wobei die Leitrippen im Maschinenbett seitlich weiter außen als die zweiten Hauptrippen angeordnet sind.

Die Leitrippen können in besonders vorteilhaftem Maße die Metallspäne oder den Kühl-Schmierstoff, die von dem Maschinentisch herabfallen oder der herunterfließt, zu dem entsprechenden Freiraum leiten, in diesem z.B. eine materialtransportierende Einrichtung vorgesehen ist.

Die erfindungsgemäße Werkzeugmaschine kann dadurch vorteilhaft weitergebildet werden, dass die ersten Hauptrippen eine Vielzahl an periodisch vorgesehenen Durchgangsöffnungen aufweisen, wobei das Material auf den Leitrippen durch die Durchgangsöffnungen hindurch zu dem jeweiligen Freiraum geleitet wird.

Zudem ist es vorteilhaft, wenn die ersten Hauptrippen periodisch angeordnete Durchgangsöffnungen aufweisen, durch die Metallspäne und/oder Kühl-Schmierstoff vom Maschinentisch zu dem entsprechenden Freiraum auf den jeweiligen Leitrippen geleitet werden. So kann auf vorteilhafte Weise eine Last der Führungsschienen von den Maschinenfüßen aufgenommen werden und gleichzeitig anfallendes Material (z.B. Metallspäne, Kühl-Schmierstoff, etc.) von dem Maschinentisch, der auf dem Maschinenbett vorgesehen ist, hin zu dem jeweiligen Freiraum über die Leitrippen geleitet werden.

Ferner kann die erfindungsgemäße Werkzeugmaschine dadurch vorteilhaft weitergebildet werden, dass die materialtransportierende Einrichtung ein ketten- und/oder schneckenförmiger Späneförderer ist.

Dabei ist die materialtransportierende Einrichtung nicht auf ketten- und/oder schneckenförmige Späneförderer beschränkt. Vielmehr sollen die beiden Ausführungsformen lediglich als Beispiele dienen. Jegliche andere Form einer materialtransportierenden Einrichtung kann natürlich ebenfalls unter bzw. in das Maschinenbett eingeschoben werden.

Eine weitere vorteilhafte Weiterbildung der erfindungsgemäßen Werkzeugmaschine besteht darin, dass das Portal der Werkzeugmaschine zum Tragen einer Bearbeitungseinrichtung eingerichtet ist, wobei das Portal zwei Ständer und einen von den Ständern getragenen Querbalken aufweist, und die Ständer auf den Führungsschienen über den Maschinentisch hinweg verfahren werden können.

Eine weitere vorteilhafte Weiterbildung der erfindungsgemäßen Werkzeugmaschine besteht darin, dass die durch den Querträger getragene Bearbeitungseinrichtung mittels zweier Linearachsen verfahren werden kann, wobei die zwei Linearachsen sowohl senkrecht zueinander als auch senkrecht zu der Führungsbahn der Führungsschienen angeordnet sind.

Hierdurch kann die Bearbeitungseinrichtung (z.B. eine Arbeitsspindel, oder eine andere Material abtragende Einrichtung) mindestens entlang der drei Raumrichtungen bewegt werden. Ferner könnte die Werkzeugmaschine beispielsweise in der Art vorteilhaft weitergebildet werden, dass zusätzlich der Maschinentisch um ein, zwei oder weitere Achsen in seiner Lage zu der Bearbeitungseinrichtung veränderbar ist, ähnlich wie dies von Dreh- oder Schwenktischen bekannt ist.

Durch die Anordnung der ersten und zweiten Hauptrippen gemäß der erfindungsgemäßen Werkzeugmaschine konnte auf einfache Weise eine Erhöhung der Steifigkeit der Werkzeugmaschine erreicht werden. Zudem konnte durch die Anordnung ferner ein Freiraum in Bodennähe geschaffen werden, der es ermöglicht, z.B. einen Späneförderer in bzw. unter das Maschinenbett zu schieben und somit zum einen den Abtransport von Metallspänen und/oder Kühl-Schmierstoff schnell und zuverlässig zu gewährleisten und gleichzeitig die benötigte Aufstellfläche der Werkzeugmaschine zu reduzieren.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1: zeigt schematisch eine Ausführungsform einer erfindungsgemäßen Werkzeugmaschine, mit ersten und zweiten Hauptrippen und Leitrippen, im Querschnitt;
- Fig. 2: zeigt schematisch eine Ausführungsform der erfindungsgemäßen Werkzeugmaschine, mit sichtbaren Durchgangsöffnungen in der ersten Hauptrippe, in einer Schnittdarstellung in räumlicher Ansicht;
- Fig. 3: zeigt schematisch eine Ausführungsform der erfindungsgemäßen Werkzeugmaschine in einem vergrößerten Ausschnitt der Schnittdarstellung in frontaler Ansicht;

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

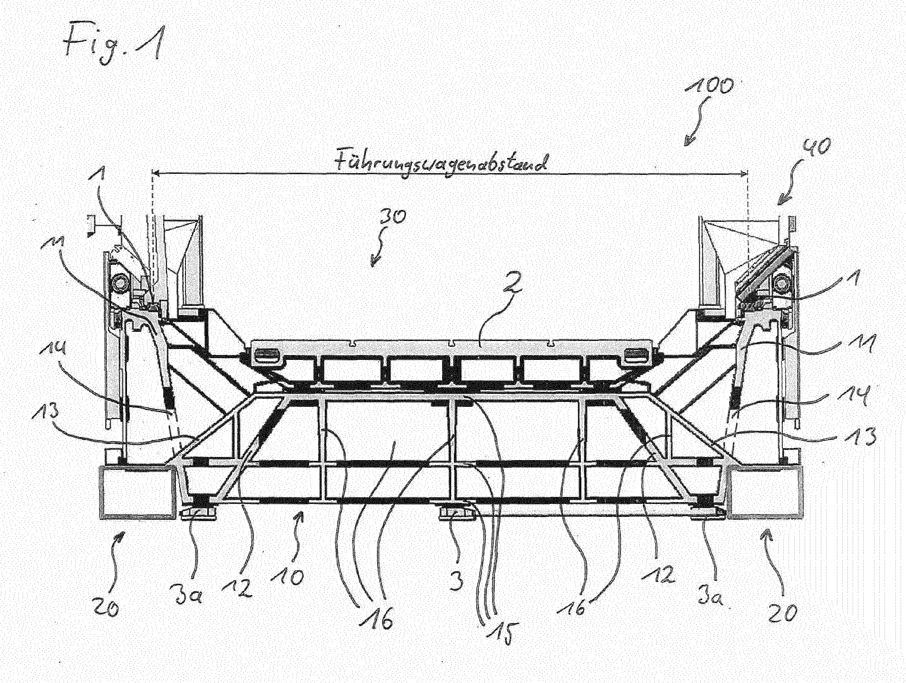

Fig. 1 zeigt schematisch eine Ausführungsform einer erfindungsgemäßen Werkzeugmaschine 100, mit ersten und zweiten Hauptrippen 11, 12 und Leitrippen 13, die in einem Maschinenbett 10 der Werkzeugmaschine 100 als eine Stützstruktur vorgesehen sind.

Das Maschinenbett 10 wird dabei auf einer Vielzahl von Maschinenfüßen 3, 3a aufgestellt, die die gesamte Last der Werkzeugmaschine 100 inkl. eines eingespannten Werkstücks tragen. Die Stützstruktur, die dem Maschinenbett 10 eine entsprechende Traglast und Steifigkeit geben soll, ist derart aufgebaut, dass sich die ersten Hauptrippen 11 von den Führungsschienen 1 bis zu den Maschinenfüßen (hier die Maschinenfüße 3a, die eine Standfläche der Werkzeugmaschine 100 aufspannen) erstrecken, wobei die ersten Hauptrippen 11 in dem Maschinenbett 10 schräg nach innen verlaufen, da die am weitesten außen angeordneten Maschinenfüße 3a, in Relation zum Maschinenbett 10, weiter innen angeordnet sind, als die Führungsschienen 1, die auf der Oberseite des Maschinenbettes 10 vorgesehen sind.

Hierdurch werden gleich zwei Vorteile erreicht: Zum einen wird die Steifigkeit einer auf den Führungsschienen 1 verfahrbaren Einrichtung (z.B. ein Portal 40, das eine Arbeitsspindel trägt) erhöht, da der Abstand der Führungsschienen 1 annähernd der Breite des Maschinenbettes 10 entspricht und somit ein maximal möglicher Führungswagenabstand (Abstand der Führungsschienen 1, in Fig. 1 kenntlich gemacht) gewährleistet werden kann. Zum anderen wird durch die in Richtung der Maschinenfüße 3a nach innen verlaufenden ersten Hauptrippen 11 ein Freiraum 20 geschaffen, der sich unterhalb der Führungsschienen 1 und in Bodennähe befindet und für das Einsetzen einer materialtransportierenden Einrichtung (z.B. ein ketten- und/oder schneckenförmiger Späneförderer 21; in Fig. 1 nicht gezeigt, lediglich durch die Rechtecke in der linken und rechten unteren Ecke des Maschinenbettes 10 angedeutet) genutzt werden kann.

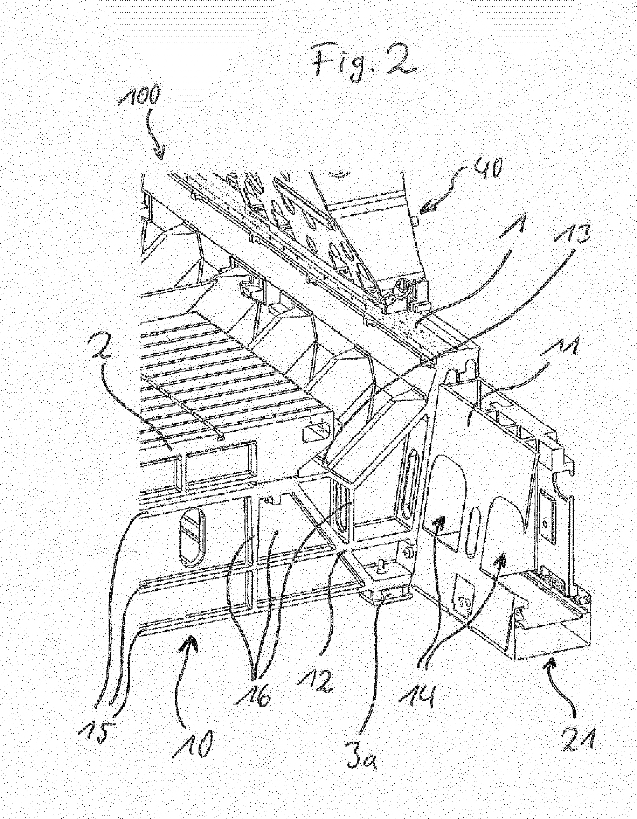

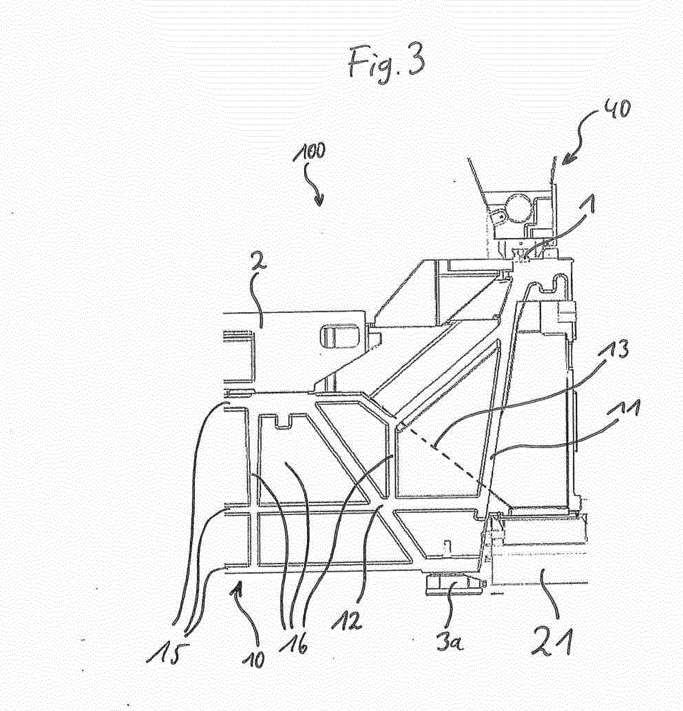

Der Einschub des Späneförderers 21 (in Fig. 1 nicht gezeigt, siehe Fig. 2 und 3) unter bzw. in das Maschinenbett 10 bietet weitere Vorteile. Der Späneförderer 21 kann so näher an den Maschinentisch 2 der Werkzeugmaschine 100 vorgesehen werden, so dass Metallspäne (oder Spangut eines anderen Materials) und/oder Kühl-Schmierstoff relativ zügig und zuverlässig aus der Werkzeugmaschine 100, insbesondere aus dem Arbeitsbereich 30, abgeführt werden können.

Zudem kann der Späneförderer 21 derart unter bzw. in das Maschinenbett 10 eingeschoben werden, dass er mit einer Außenfläche der Werkzeugmaschine 100 bündig abschließt, so dass das Maschinenbett 10 im Wesentlichen eine rechteckige Außenkontur (im Querschnitt betrachtet) aufweist. Dies bietet neben einem kompakteren Aufbau der Werkzeugmaschine 100 auch eine erhöhte Sicherheit für den Maschinenbediener, da weniger Aggregate und Vorrichtungen an der bzw. um die Werkzeugmaschine 100 herum angeordnet sind, an denen sich der Maschinenbediener verletzen kann oder über die er stolpern kann.

Ein weiteres Element in der Stützstruktur des Maschinenbettes 10 sind die Leitrippen 13. Sie leiten Metallspäne und/oder Kühl-Schmierstoff, die von dem Maschinentisch 2 herunterfallen bzw. herunterfließen zu dem entsprechenden Freiraum 20 mit dem eingeschobenen Späneförderer 21 (in Fig. 1 nicht gezeigt, siehe Fig. 2 und 3).

Dabei sind die Leitrippen 13 derart steil angestellt, dass vom Maschinentisch 2 herabfallende Metallspäne ohne eine zusätzliche Vorrichtung über die Leitrippen 13 zu dem Späneförderer 21 gleiten. Bedingt durch die Anordnung der Verrippungen und des Späneförderers 21 müssen die Metallspäne wie auch der Kühl-Schmierstoff durch die ersten Hauptrippen 11 hindurch geleitet werden. Dies ist aber möglich, da die ersten Hauptrippen 11 eine Vielzahl an Durchgangsöffnungen 14 aufweisen, die zumeist periodisch angeordnet sind. Jedoch können die Abstände der Durchgangsöffnungen 14 auch Abweichungen aufweisen. Dies kann z.B. dann erforderlich sein, wenn weitere Elemente der Stützstruktur des Maschinenbettes 10 eine periodische Anordnung der Durchgangsöffnungen 14 nicht zulassen.

Ein weiteres wesentliches Element in der Stützstruktur des Maschinenbettes 10 sind die zweiten Hauptrippen 12. Sie verlaufen unterhalb des äußeren Bereiches des Maschinentisches 2 schräg nach außen zu den Maschinenfüßen 3a. Dabei sind sie in der Lage, sowohl die Last des Maschinentisches 2 und eines eingespannten Werkstücks aufzunehmen und in die Maschinenfüße 3a einzuleiten, als auch Querkräfte vom Maschinentisch 2, die bei der Bearbeitung des Werkstücks auftreten, zuverlässig in die Maschinenfüße 3a einzuleiten und dadurch den Einfluss dieser Kräfte auf die umliegende Stützstruktur zu minimieren.

Eine Besonderheit der Stützstruktur des Maschinenbettes 10 bildet die Anordnung von ersten Hauptrippen 11 und zweiten Hauptrippen 12. Sie sind V-förmig zueinander ausgebildet. Dies führt dazu, dass der gegenseitige Einfluss der ersten Hauptrippen 11, die die Lasten und Kräfte der Führungsschienen 1 aufnehmen, und der zweiten Hauptrippen 12, die die Kräfte und Lasten des Maschinentisches 2 aufnehmen, auf ein Minimum begrenzt wird.

Dies ist besonders vorteilhaft, da es sich bei den entstehenden Kräften vor allem um veränderliche Kräfte (z.B. veränderliche Masse/n des Werkstücks, sich ständig ändernde Querkräfte bei der Bearbeitung des Werkstücks, etc.) handelt. Diese Kräfte sind zeitlich veränderlich und können daher nur durch einen hohen Aufwand (z.B. eine Vielzahl an weiteren Positions-Messsystemen etc.) während des Bearbeitungsprozesses überwacht und gegebenenfalls kompensiert werden. Daher ist es vorteilhaft, den gegenseitigen Einfluss von Maschinentisch 2 und Bearbeitungseinrichtung (z.B. Arbeitsspindel an einem Portal 40) aufgrund der auftretenden Kräfte von Beginn an so klein wie möglich zu halten.

Ferner ist es vorteilhaft, wenn die erfindungsgemäße Werkzeugmaschine 100 auf einer 3-Punkt-Auflage aufgestellt wird, die durch die Maschinenfüße 3. 3a gebildet wird.

Hierdurch werden die hohen Steifigkeiten des Maschinebettes 10 aufgrund der ersten und zweiten Hauptrippen 11, 12 mit der Standfestigkeit und guten Justierbarkeit einer 3-Punkt-Auflage kombiniert. Dadurch können auftretende Kräfte beim Bearbeitungsprozess und/oder Lasten z.B. des zu bearbeitenden Werkstücks optimal in den Untergrund eingeleitet werden.

Zudem ist dies vorteilhaft, da es zu nur noch zu minimalen Verformungen des Maschinenbettes 10 aufgrund von z.B. veränderlichen Lasten kommen kann, wobei sich diese Verformungen aber nicht weiter auf die Standfestigkeit des Maschinenbettes 10 auswirken können. Hierdurch kann die Präzision in der Bearbeitung eines Werkstücks verbessert werden.

Zudem können einzelne Maschinenfüße 3, 3a in einer Fest-Loslager-Kombination ausgeführt sein, um z.B. bei thermischen Ausdehnungen des Maschinenbettes 10 keine Verformungen durch Verspannen des Maschinenbettes 10 hervorzurufen. Dies kann zusätzlich die Präzision in der Bearbeitung eines Werkstücks erhöhen.

Neben den ersten und zweiten Hauptrippen 11, 12 weist die Stützstruktur auch eine Vielzahl horizontaler Rippen 15 und vertikaler Rippen 16 auf, die im Zusammenspiel mit den ersten und zweiten Hauptrippen 11, 12 sowie den Leitrippen 13 die Steifigkeit des Maschinenbettes 10 insgesamt erhöhen bzw. der Stützstruktur die entsprechend erforderliche oder gewünschte Steifigkeit geben.

Die Stützstruktur kann neben den bisher genannten Verrippungen aber auch noch weitere, z.B. zwischen den horizontalen und vertikalen Rippen 15, 16 schräg verlaufende Rippen aufweisen, um die Steifigkeit des Maschinenbettes 10 zu erhöhen.

Fig. 2 zeigt schematisch eine Ausführungsform der erfindungsgemäßen Werkzeugmaschine 100, mit sichtbaren Durchgangsöffnungen 14 in der ersten Hauptrippe 11, in einer Schnittdarstellung in räumlicher Ansicht.

Dabei ist im Seitenbereich der Werkzeugmaschine 100 unter anderem eine der ersten Hauptrippen 11 mit Durchgangsöffnungen 14 sowie ein Späneförderer 21 (z.B. ein kettenförmiger Späneförderer) von dem restlichen Maschinenbett 10 hervorstehend dargestellt.

Die nun erkennbaren Durchgangsöffnungen 14 sind derart ausgestaltet, dass sie in ihrem oberen Bereich eine bogenförmige Kontur bzw. zwei abgerundete Eckbereiche aufweisen, so dass ihr oberer Bereich eine brückenähnliche Form aufweist. Dies hat den Vorteil, dass die ersten Hauptrippen 11 in Längsrichtung, also in Richtung der Führungsbahn der Führungsschienen 1 (auf denen z.B. ein Portal 40 mit einer Bearbeitungseinrichtung verfahren werden kann), steifer ausgestaltet sind und dadurch höhere Kräfte, die entlang der Längsrichtung wirken, aufnehmen können. Diese Kräfte können nun auf direktem Weg in die Maschinenfüße 3, 3a eingeleitet werden, ohne dabei die zweiten Hauptrippen 12 und entsprechend die Stützstruktur unterhalb des Maschinentisches 2 zu stark zu beeinflussen.

Gleichzeitig ermöglicht die brückenähnliche Form des oberen Bereiches der Durchgangsöffnungen 14 das Ausgestalten von großzügig ausgelegten Durchgangsöffnungen 14. Dies bietet den Vorteil, sowohl eine hohe Steifigkeit im Maschinenbett 10 zu erzeugen und gleichzeitig den zügigen Abtransport von anfallendem Material (z.B. Metallspäne etc.) und/oder Kühl-Schmierstoff zuverlässig zu gewährleisten.

Die Metallspäne und/oder der Kühl-Schmierstoff, die vom Maschinentisch 2 herabfallen bzw. herabfließt, werden über die Leitrippen 13 dem Späneförderer 21 zugeführt. Dieser kann nun die Metallspäne und/oder den Kühl-Schmierstoff aus der Werkzeugmaschine 100 fördern oder, je nach Ausgestaltung des Späneförderers 21, gleich eine Trennung von Metallspänen und Kühl-Schmierstoff vornehmen. Dies kann vorteilhaft sein, um zum einen eine Entsorgung der Metallspäne zu gewährleisten und gleichzeitig den Kühl-Schmierstoff zügig einer Wiederaufbereitung zuzuführen.

Ferner zeigt Fig. 2 die horizontalen und vertikalen Rippen 15, 16 in entsprechend räumlicher Ansicht.

Fig. 3 zeigt schematisch eine Ausführungsform der erfindungsgemäßen Werkzeugmaschine 100 in einem vergrößerten Ausschnitt der Schnittdarstellung in frontaler Ansicht mit angedeutetem Verlauf der Leitrippen 13 (gestrichelte Linie).

Dadurch ist zu erkennen, wie vom Maschinentisch 2 herabfallendes Material (z.B. Metallspäne) oder abfließender Kühl-Schmierstoff auf der Oberfläche der Leitrippe 13 zu dem Freiraum bzw. zu dem Späneförderer 21 geleitet wird. Dabei ist die Leitrippe 13 derart steil angestellt, dass das herabfallende Material und/oder der herabfließende Kühl-Schmierstoff ohne zusätzliche Vorrichtungen vom Maschinentisch 2 in Richtung Späneförderer 21 gleiten bzw. fließen kann.

Weiterhin ist der Verlauf der ersten und zweiten Hauptrippen 11, 12 im Maschinenbett 10 sehr gut zu erkennen, so dass die erste Hauptrippe 11 und die zweite Hauptrippe 12 eine V-förmige Anordnung zueinander aufweisen und am Punkt des Maschinenfußes 3a zusammenlaufen. Dies reduziert vorteilhaft die gegenseitige Beeinflussung der ersten und zweiten Hauptrippen 11, 12 durch die jeweiligen, veränderlichen Lasten und Kräfte. Hierdurch konnte die Genauigkeit der Werkzeugmaschine 100 effektiv erhöht werden.

Ferner zeigt Fig. 3 noch einmal die Anordnung der Führungsschienen 1 und eines auf den Führungsschienen 1 verfahrbaren Portals 40 sowie die horizontalen und vertikalen Rippen 15, 16 in entsprechender Frontalansicht.

### LISTE DER BEZUGSZEICHEN

- 1: Führungsschiene
- 2: Maschinentisch
- 3, 3a: Maschinenfuß
- 10: Maschinenbett
- 11: erste Hauptrippe
- 12: zweite Hauptrippe
- 13: Leitrippe
- 14: Durchgangsöffnung
- 15: horizontale Rippe
- 16: vertikale Rippe
- 20: Freiraum
- 21: Späneförderer
- 30: Arbeitsbereich
- 40: Portal
- 100: Werkzeugmaschine

## Patentansprüche

1. Werkzeugmaschine (100), mit:
einem auf Maschinenfüßen (3, 3a) getragenen Maschinenbett (10), das aus einer Tragstruktur von miteinander verbundenen Rippen gebildet wird, wobei auf der Oberseite, an gegenüberliegenden Außenseiten des Maschinenbettes (10) zwei ein Portal (40) tragende Führungsschienen (1) zum Verfahren des Portals (40) auf dem Maschinenbett (10) angeordnet sind,
**dadurch gekennzeichnet, dass**
das Portal (40) oberhalb eines Maschinentisches (2) verfahrbar ist, der zwischen den zwei Führungsschienen (1) vorgesehen ist, und
beidseitig des Maschinenbettes (10) erste Hauptrippen (11) vorgesehen sind, deren Profil im Querschnitt des Maschinenbettes (10) unterhalb der Führungsschienen (1) beginnt und sich im Maschinenbett (10) schräg nach innen, hin zu Maschinenfüßen (3a) erstreckt, um auf die Führungsschienen (1) wirkende Lasten in die Maschinenfüße (3a) einzuleiten.

2. Werkzeugmaschine (100) nach Anspruch 1, **dadurch gekennzeichnet, dass**
in Bezug auf die ersten Hauptrippen (11) innen beidseitig zweite Hauptrippen (12) vorgesehen sind, deren Profil im Querschnitt des Maschinenbettes (10) unterhalb des Maschinentisches (2) beginnt und sich im Maschinenbett (10) schräg nach außen, hin zu den außenliegenden Maschinenfüßen (3a) erstreckt, um auf den Maschinentisch (2) wirkende Lasten in die Maschinenfüße (3a) einzuleiten.

3. Werkzeugmaschine (100) nach Anspruch 1 oder 2, **dadurch gekennzeichnet, dass**
das Maschinenbett (10) seitlich unterhalb der Führungsschienen (1) im Bodenbereich jeweils einen Freiraum (20) aufweist, der dazu geeignet ist, eine materialtransportierende Einrichtung (21) seitlich unter das Maschinenbett (10) einzuschieben.

4. Werkzeugmaschine (100) nach Anspruch 3, **dadurch gekennzeichnet, dass**
die materialtransportierende Einrichtung (21) entlang einer gesamten Seitenlänge des Maschinenbettes (10) unter das Maschinenbett (10) eingeschoben werden kann.

5. Werkzeugmaschine (100) nach Anspruch 3 oder 4, **dadurch gekennzeichnet, dass**
das Maschinenbett (10) derart ausgebildet ist, dass eine Außenseite der materialtransportierenden Einrichtung (21) mit einer entsprechenden Außenseite des Maschinenbettes (10), nach dem Einschub der materialtransportierenden Einrichtung (21) unter das Maschinenbett (10), im Wesentlichen bündig abschließen kann.

6. Werkzeugmaschine (100) nach einem der Ansprüche 3 bis 5, **dadurch gekennzeichnet, dass**
in dem Maschinenbett (10) beidseitig Leitrippen (13) vorgesehen sind, deren Profil im Querschnitt des Maschinenbettes (10) unterhalb einer Außenseite des Maschinentisches (10) beginnt und sich im Maschinenbett (10) schräg nach außen, hin zu dem entsprechenden Freiraum (20) erstreckt, um vom Maschinentisch (2) herabfallendes Material zu dem Freiraum (21) zu leiten, wobei
die Leitrippen (13) im Maschinenbett (10) seitlich weiter außen als die zweiten Hauptrippen (12) angeordnet sind.

7. Werkzeugmaschine (100) nach Anspruch 6, **dadurch gekennzeichnet, dass**
die ersten Hauptrippen (11) eine Vielzahl an periodisch vorgesehenen Durchgangsöffnungen (14) aufweisen, wobei das Material auf den Leitrippen (13) durch die Durchgangsöffnungen (14) hindurch zu dem jeweiligen Freiraum (21) geleitet wird.

8. Werkzeugmaschine (100) nach einem der Ansprüche 3 bis 7, **dadurch gekennzeichnet, dass**
die materialtransportierende Einrichtung (21) ein ketten- und/oder schneckenförmiger Späneförderer (21) ist.

9. Werkzeugmaschine (100) nach einem der vorgenannten Ansprüche, **dadurch gekennzeichnet, dass**
das Portal (40) der Werkzeugmaschine (100) zum Tragen einer Bearbeitungseinrichtung eingerichtet ist, wobei das Portal (40) zwei Ständer und einen von den Ständern getragenen Querbalken aufweist, und die Ständer auf den Führungsschienen (1) über den Maschinentisch (2) hinweg verfahren werden können.

10. Werkzeugmaschine (100) nach Anspruch 9, **dadurch gekennzeichnet, dass**
die durch den Querträger getragene Bearbeitungseinrichtung mittels zweier Linearachsen verfahren werden kann, wobei die zwei Linearachsen sowohl senkrecht zueinander als auch senkrecht zu der Führungsbahn der Führungsschienen (1) angeordnet sind.

## Claims

1. Machine tool (100), with:
a machine bed (10) supported on machine feet (3, 3a) and formed by a support structure of interconnected ribs, wherein two guide rails (1) supporting a gantry (40) are arranged on the upper side, on opposite outer sides of the machine bed (10), for moving the gantry (40) on the machine bed (10),
**characterized in that**
the gantry (40) is movable above a machine table (2) provided between the two guide rails (1), and first main ribs (11) are provided on both sides of the machine bed (10), whose profiles with respect to a cross-section of the machine bed (10) begin below the guide rails (1) and extend obliquely inwards within the machine bed (10) towards machine feet (3a), in order to introduce loads acting on the guide rails (1) into the machine feet (3a).

2. Machine tool (100) according to claim 1, **characterized in that**
in relation to the first main ribs (11), second main ribs (12) are provided on the inside on both sides, whose profiles with respect to the cross-section of the machine bed (10) begin below the machine bed (2) and extend within the machine bed (10) obliquely outwards towards the machine feet (3a) located on the outside, in order to introduce loads acting on the machine bed (2) into the machine feet (3a).

3. Machine tool (100) according to claim 1 or 2, **characterized in that**
the machine bed (10) has a free space (20) laterally below each guide rail (1), which is suitable for inserting a material transporting device (21) laterally underneath the machine bed (10).

4. Machine tool (100) according to claim 3, **characterized in that**
the material transporting device (21) can be inserted underneath the machine bed (10) along an entire length of a side of the machine bed (10).

5. Machine tool (100) according to claim 3 or 4, **characterized in that**
the machine bed (10) is designed such that an outer side of the material transporting device (21) can be substantially flush with a corresponding outer side of the machine bed (10) after the material transporting device (21) has been inserted underneath the machine bed (10).

6. Machine tool (100) according to any one of claims 3 to 5, **characterized in that**
guide ribs (13) are provided within the machine bed (10) on both sides, whose profiles with respect to the cross-section of the machine bed (10) start below an outer side of the machine bed (10) and extend obliquely outwards within the machine bed (10) towards the respective free space (20) in order to guide material falling from the machine bed (2) to the free space (21), wherein
the guide ribs (13) within the machine bed (10) are arranged laterally further outside than the second main ribs (12).

7. Machine tool (100) according to claim 6, **characterized in that**
the first main ribs (11) have a plurality of openings (14) which are periodically provided, wherein the material on the guide ribs (13) is guided through the openings (14) to the respective free space (21).

8. Machine tool (100) according to any one of claims 3 to 7, **characterized in that**
the material transporting device (21) is a chain-shaped and/or screw-shaped chip conveyor (21).

9. Machine tool (100) according to any one of the preceding claims, **characterized in that**
the gantry (40) of the machine tool (100) is configured to support a machining device, wherein the gantry (40) has two columns and a crossbar supported by the columns, and the columns can be moved on the guide rails (1) across the machine table (2).

10. Machine tool (100) according to claim 9, **characterized in that**
the processing device supported by the crossbeam can be moved by means of two linear axes, wherein the two linear axes are arranged both perpendicularly to each other and perpendicularly to the guideway of the guide rails (1).

## Revendications

1. Machine-outil (100), comprenant :
un banc de machine (10) porté sur des pieds de machine (3, 3a), qui est formé d'une structure de support de nervures reliées les unes aux autres, dans laquelle deux rails de guidage (1), portant un portique (40) pour déplacer le portique (40) sur le banc de machine (10), sont disposés sur la face supérieure, sur des faces extérieures opposées du banc de machine (10),
**caractérisée en ce que**
le portique (40) peut être déplacé au-dessus d'une table de machine (2), qui est prévu entre les deux rails de guidage (1), et
des premières nervures principales (11), dont le profil dans la section transversale du banc de machine (10) commence en-dessous des rails de guidage (1) et s'étend dans le banc de machine (10) de manière oblique vers l'intérieur, en direction des pieds de machine (3a), afin d'introduire des charges agissant sur les rails de guidage (1) dans les pieds de machine (3a), sont prévues des deux côtés du banc de machine (10).

2. Machine-outil (100) selon la revendication 1, **caractérisée en ce que**
des deuxièmes nervures principales (12), dont le profil commence dans la section transversale du banc de machine (10) en-dessous de la table de machine (2) et s'étend dans le banc de machine (10) de manière oblique vers l'extérieur, en direction des pieds de machine (3a) extérieurs, afin d'introduire des forces agissant sur la table de machine (2) dans les pieds de machine (3a), sont prévues des deux côtés à l'intérieur par rapport aux premières nervures principales (11).

3. Machine-outil (100) selon la revendication 1 ou 2, **caractérisée en ce que**
le banc de machine (10) présente latéralement en-dessous des rails de guidage (1) dans la zone de fond respectivement un espace libre (20), qui est adapté pour insérer un dispositif transportant un matériau (21) latéralement sous le banc de machine (10).

4. Machine-outil (100) selon la revendication 3, **caractérisée en ce que**
le dispositif transportant un matériau (21) peut être inséré sous le banc de machine (10) le long de toute une longueur latérale du banc de machine (10).

5. Machine-outil (100) selon la revendication 3 ou 4, **caractérisée en ce que**
le banc de machine (10) est réalisé de telle sorte qu'une face extérieure du dispositif transportant un matériau (21) peut se terminer sensiblement en affleurement avec une face extérieure correspondante du banc de machine (10), après l'insertion du dispositif transportant un matériau (21) sous le banc de machine (10).

6. Machine-outil (100) selon l'une quelconque des revendications 3 à 5, **caractérisée en ce que**
des nervures directrices (13), dont le profil dans la section transversale du banc de machine (10) commence en-dessous d'une face extérieure du banc de machine (10) et s'étend de manière oblique vers l'extérieur dans le banc de machine (10), en direction de l'espace libre (20) correspondant, pour conduire le matériau tombant de la table de machine (2) vers l'espace libre (21) sont prévues des deux côtés dans le banc de machine (10), dans laquelle
les nervures directrices (13) sont disposées dans le banc de machine (10) latéralement plus à l'extérieur que les deuxièmes nervures principales (12).

7. Machine-outil (100) selon la revendication 6, **caractérisée en ce que**
les premières nervures principales (11) présentent une pluralité d'ouvertures de passage (14) prévues de façon périodique, dans laquelle le matériau est dirigé sur les nervures directrices (13) à travers les ouvertures de passage (14) vers l'espace libre (21) respectif.

8. Machine-outil (100) selon l'une quelconque des revendications 3 à 7, **caractérisée en ce que**
le dispositif transportant un matériau (21) est un convoyeur de copeaux (21) en forme de chaîne et/ou de vis sans fin.

9. Machine-outil (100) selon l'une quelconque des revendications précédentes, **caractérisée en ce que**
le portique (40) de la machine-outil (100) est conçu pour porter un dispositif d'usinage, dans laquelle le portique (40) présente deux montants et une poutre transversale portée par les montants, et les montants peuvent être déplacés sur les rails de guidage (1) au-delà de la table de machine (2).

10. Machine-outil (100) selon la revendication 9, **caractérisée en ce que**
le dispositif d'usinage porté par la poutre transversale peut être déplacé au moyen de deux axes linéaires, dans laquelle les deux axes linéaires sont disposés aussi bien perpendiculairement l'un à l'autre que perpendiculairement à la voie de guidage des rails de guidage (1).
